# EUROPÄISCHE PATENTSCHRIFT

(11) **EP 4 385 768 B1**
(45) Veröffentlichungstag und Bekanntmachung des Hinweises auf die Patenterteilung: **19.08.2026**
(21) Anmeldenummer: 23213996.4
(22) Anmeldetag: 04.12.2023
(51) Int. Cl.: B60D 1/06, B60D 1/48, B60R 9/06, B60R 9/10

(54) **LASTENTRÄGER FÜR EIN FAHRZEUG UND FAHRZEUG MIT DEMSELBEN**
LOAD CARRIER FOR A VEHICLE AND VEHICLE HAVING THE SAME
PORTE-CHARGE POUR UN VÉHICULE ET VÉHICULE ÉQUIPÉ DE CELUI-CI

(30) Priorität: 23.12.2022 DE 102022134723
(43) Veröffentlichungstag der Anmeldung: 19.06.2024
(73) Patentinhaber: Thule NV, 8930 Menen (BE)
(72) Erfinder: DE MAEYER, Erik, 8810 Lichtervelde (BE); BROWAEYS, Wouter, 8560 Wevelgem (BE)
(74) Vertreter: Wallentin, Lars

(56) Entgegenhaltungen:
- CA-A1- 3 023 871
- DE-A1- 102019 106 573
- DE-U1- 202017 105 519
- JP-A- H08 175 276
- JP-A- H08 295 180
- US-A- 5 879 102

## Beschreibung

### Technisches Gebiet

Die vorliegende Erfindung bezieht sich auf einen Lastenträger für ein Fahrzeug, insbesondere für ein Heck eines Kastenwagens. Ferner bezieht sich die vorliegende Erfindung auf ein Fahrzeug mit solch einem Lastenträger.

### Stand der Technik

Viele Kastenwägen weisen Hecktüren auf, die zweiflüglig ausgebildet sein können und sich nach außen öffnen. Weist solch ein Kastenwagen eine Anhängerkupplung mit beispielsweise einem darauf montierten Fahrradträger auf, ragt dieser Fahrradträger häufig in den Öffnungsbereich der Hecktür hinein. Dadurch kann die Hecktür entweder gar nicht oder lediglich im beschränkten Ausmaß geöffnet werden. Um dieses Problem zu adressieren, sind aus dem Stand der Technik Anhängerkupplungen für als Kastenwagen ausgebildete Fahrzeuge bekannt, die an einem relativ zum Fahrzeugheck schwenkbaren Lastentrageabschnitt befestigt sind. Soll die Hecktür des Kastenwagens bei derartigen Systemen geöffnet werden, kann der Lastentrageabschnitt mit der daran montierten Anhängerkupplung von der Hecktür des Kastenwagens weg geschwenkt werden, um diese ungestört öffnen zu können. Ein derartiger Lastenträger ist beispielsweise aus der EP 3 466 728 B1 bekannt. US 5,879,102 A bezieht sich auf eine Klemmeinrichtung zum Arretierung von Teleskopkomponenten eines Fahrzeugs, JP H08 175276 A bezieht sich auf einen Träger für ein Fahrzeugheck, der ein Öffnen/Schließen einer hinteren Tür erlaubt, DE 10 2019 106 573 A1 bezieht sich auf einen Montageadapter für einen anhängergebundenen Lastenträger und CA 3 023 871 A1 bezieht sich auf ein ausschwenkbares Transportsystem zum Montieren an dem Heck eines Fahrzeug.

### Darstellung der Erfindung

Die vorliegende Erfindung bezieht sich in einem ersten Aspekt auf einen Lastenträger für ein Fahrzeug. Bei dem Fahrzeug handelt es sich insbesondere um einen Kastenwagen, beispielsweise um einen Van, ein Reisemobil, einen Pkw oder einen sonstigen Kastenwagen. Der Kastenwagen kann eine Hecktür, beispielsweise eine zweiflüglige Hecktür, aufweisen, über welche ein Zugang zu einem Inneren des Kastenwagens, beispielsweise zum Kofferraum des Kastenwagens, bereitgestellt werden kann. Die Hecktür kann eine im Wesentlichen aufrechte Schwenkachse aufweisen, um welche die Tür zum Öffnen und Schließen verschwenkt werden kann. Der Lastenträger der vorliegenden Erfindung ist ausgebildet, um insbesondere an einem Heck des Kastenwagens angebracht zu werden. An dem Lastenträger können Lastentrageeinrichtungen, beispielsweise ein Fahrradträger, eine Transportbox und/oder eine andere Lastentrageeinrichtung, befestigt werden.

Der Lastenträger weist einen Fahrzeugbefestigungsabschnitt zum Befestigen des Lastenträgers an dem Fahrzeug auf. Der Fahrzeugbefestigungsabschnitt kann ausgebildet sein, um an einem Heck des Fahrzeugs angebracht zu werden. Beispielsweise ist der Fahrzeugbefestigungsabschnitt ausgebildet, um an einem Chassis des Fahrzeugs, beispielsweise einer Querstrebe des Chassis, angebracht zu werden. Die Querstrebe des Chassis kann in Querrichtung des Fahrzeugs von der linken zur rechten Seite, beispielsweise entlang der gesamten Fahrzeugbreite, verlaufen. Der Fahrzeugbefestigungsabschnitt kann an dem Fahrzeug permanent befestigbar sein, so dass dieser lediglich unter Zuhilfenahme von zusätzlichem Werkzeug und/oder unter Zerstörung desselben demontiert werden kann.

Darüber hinaus umfasst der Lastenträger einen länglichen Lastentrageabschnitt, an dem beispielsweise eine Lastentrageeinrichtung anbringbar ist. Der Lastentrageabschnitt weist eine längliche Gestalt und damit eine Erstreckung in eine Richtung auf, welche signifikant länger als die Erstreckung des Lastentrageabschnitts in die beiden anderen Richtungen ist, welche senkrecht zueinander und zu der einen Richtung angeordnet sind. Bei dem Lastentrageabschnitt handelt es sich insbesondere um einen Schwingarm. Der Schwingarm kann als Schwingstange ausgebildet sein, die einen kreisrunden, quadratischen oder sonstigen Querschnitt aufweisen kann. Der längliche Lastentrageabschnitt kann ein proximales Ende und ein distales Ende aufweisen. Sowohl an dem proximalen Ende als auch an dem distalen Ende kann der längliche Lastentrageabschnitt eine Stirnfläche aufweisen. Zwischen den Stirnflächen kann der Lastentrageabschnitt eine Mantelfläche aufweisen.

Der Lastentrageabschnitt ist dabei derart vorgesehen, dass er relativ zu dem Fahrzeugbefestigungsabschnitt verschwenkbar ist, beispielsweise mittels einer durch den Fahrzeugbefestigungsabschnitt ausgebildeten Schwenklagerung. Eine Schwenkachse, um welche der Lastentrageabschnitt relativ zum Fahrzeugbefestigungsabschnitt verschwenkbar ist, kann senkrecht zur Haupterstreckungsrichtung des Lastentrageabschnitts angeordnet sein. Insbesondere ist der Lastentrageabschnitt zwischen einem Zustellzustand, bei welchem der Lastentrageabschnitt bevorzugt mittels des Arretierungsmechanismus arretiert werden kann, und einem Ausstellzustand, bei welchem der Lastentrageabschnitt bevorzugt derart verschwenkt wurde, dass die Hecktür des Kastenwagens zugänglich ist, verschwenkbar.

Darüber hinaus weist der Lastenträger einen Arretierungsmechanismus zum Arretieren des Lastentrageabschnitts auf. Mittels des Arretierungsmechanismus kann eine Verschwenkposition des Lastentrageabschnitts relativ zum Fahrzeugbefestigungsabschnitt arretiert werden. Beispielsweise kann der Lastentrageabschnitt mittels des Arretierungsmechanismus in dem Zustellzustand arretiert werden. Bei dem Arretierungsmechanismus kann es sich um ein Bauteil handeln, welches separat von dem Fahrzeugbefestigungsabschnitt und dem länglichen Lastentrageabschnitt ausgebildet sein kann. Der Arretierungsmechanismus kann ausgebildet sein, um an dem Heck des Fahrzeugs, beispielsweise an dem oben beschriebenen Querträger des Fahrzeugchassis, befestigt zu werden. Entsprechend dem Fahrzeugbefestigungsabschnitt kann der Arretierungsmechanismus sowohl permanent als auch lösbar befestigbar mit dem Fahrzeug ausgebildet sein. Insbesondere ist der Arretierungsmechanismus ausgebildet, um das distale Ende des Schwingarms, also das Ende, welches von dem Fahrzeugbefestigungsabschnitt abgewandt ist, zu arretieren.

Dabei ist der Arretierungsmechanismus gemäß der vorliegenden Erfindung ausgebildet, um den Lastentrageabschnitt von dessen Stirnseite aus zu arretieren. In anderen Worten wirkt der Arretierungsmechanismus auf die Stirnseite des Lastentrageabschnitts ein, um die Arretierungskraft auf diesen aufzubringen. Der Arretierungsmechanismus kann dabei neben der Stirnseite am distalen Ende des Lastentrageabschnitts auch auf andere Abschnitte einwirken, beispielsweise auf die Mantelfläche des Lastentrageabschnitts. In einer Ausführungsform wirkt die Arretierungseinrichtung lediglich auf die Stirnfläche des Lastentrageabschnitts und damit auf keine weitere Fläche ein. Der erfindungsgemäße Lastenträger führt zu dem Vorteil, dass eine besonders sichere und zuverlässige Arretierung des länglichen Lastentrageabschnitts bereitgestellt wird.

Die vorliegende Offenbarung bezieht sich in einem zweiten Aspekt auf einen Lastenträger für ein Fahrzeug, insbesondere für ein Heck eines Kastenwagens, aufweisend einen Fahrzeugbefestigungsabschnitt zum Befestigen des Lastenträgers an dem Fahrzeug, einen Lastentrageabschnitt, insbesondere einen Schwingarm, der relativ zu dem Fahrzeugbefestigungsabschnitt verschwenkbar ist, und einen Arretierungsmechanismus zum Arretieren des Lastentrageabschnitts, insbesondere des distalen Endes des Schwingarms. Der Lastenträger, der Fahrzeugbefestigungsabschnitt, der Lastentrageabschnitt und der Arretierungsmechanismus können jeweils gemäß der oben beschriebenen Ausführungsformen ausgebildet sein. Der Arretierungsmechanismus weist in diesem Aspekt der Erfindung ferner einen Hebelmechanismus zum Betätigen des Arretierungsmechanismus auf. Der Hebelmechanismus kann ausgebildet sein, um von einem Benutzer einhändig betätigt zu werden. Insbesondere kann der Arretierungsmechanismus derart ausgebildet sein, dass dieser lediglich durch das Betätigen des Hebelmechanismus, beispielsweise lediglich durch das Umlegen eines Hebels des Hebelmechanismus, betätigt werden kann und insbesondere keine weiteren Tätigkeiten erforderlich sind. So kann ein Lastenträger der gattungsgemäßen Art bereitgestellt werden, der durch einen Nutzer besonders einfach bedienbar ist. Daneben wird mittels eines derartigen Arretierungsmechanismus sichergestellt, dass das Risiko einer Fehlbedienung minimiert wird.

Gemäß einem dritten Aspekt bezieht sich die vorliegende Offenbarung auf einen Lastenträger für ein Fahrzeug, insbesondere für ein Heck eines Kastenwagens, aufweisend einen Fahrzeugbefestigungsabschnitt zum Befestigen des Lastenträgers an dem Fahrzeug, einen Lastentrageabschnitt, insbesondere einen Schwingarm, der relativ zu dem Fahrzeugbefestigungsabschnitt verschwenkbar ist, und einen Arretierungsmechanismus zum Arretieren des Lastentrageabschnitts, insbesondere des distalen Endes des Schwingarms. Der Lastenträger, der Fahrzeugbefestigungsabschnitt, der Lastentrageabschnitt und der Arretierungsmechanismus können gemäß der oben beschriebenen Ausführungsformen ausgebildet sein. Im Rahmen des vorliegenden dritten Aspekts weist der Arretierungsmechanismus eine Pedaleinrichtung zum Betätigen desselben auf. Bei der Pedaleinrichtung handelt es sich um ein Bauteil, welches im bestimmungsgemäßen Betrieb mittels eines Fußes eines Nutzers des Lastenträgers betätigt wird. Die Pedaleinrichtung kann ein oder mehrere Pedale aufweisen und/oder beispielsweise derart ausgebildet sein, dass sie von einer Fahrzeugseite aus betätigbar ist. Der Lastenträger der vorliegenden Ausführungsform führt zu dem Vorteil, dass dieser leicht und einfach durch einen Benutzer betätigt werden kann, insbesondere auch dann, wenn der Benutzer aktuell keine Hand zur Betätigung desselben frei hat.

In einem vierten Aspekt bezieht sich die vorliegende Offenbarung auf einen Lastenträger für ein Fahrzeug, insbesondere für ein Heck eines Kastenwagens, aufweisend einen Fahrzeugbefestigungsabschnitt zum Befestigen des Lastenträgers an dem Fahrzeug, einen Lastentrageabschnitt, insbesondere einen Schwingarm, der relativ zu dem Fahrzeugbefestigungsabschnitt verschwenkbar ist, und einen Arretierungsmechanismus zum Arretieren des Lastentrageabschnitts, insbesondere des distalen Endes des Schwingarms. Der Lastenträger, der Fahrzeugbefestigungsabschnitt, der Lastentrageabschnitt und der Arretierungsmechanismus können gemäß der oben beschriebenen Ausführungsformen ausgebildet sein. Der Arretierungsmechanismus weist in der vorliegenden Ausführungsform eine Verschließeinrichtung zum Abschließen des Arretierungsmechanismus in dessen arretierter Stellung auf. Bei der Verschließeinrichtung kann es sich beispielsweise um ein Schloss handeln, das mittels eines Schlüssels und/oder kontaktlos, beispielsweise mittels einer App, betätigt werden kann. Durch die Verschließeinrichtung kann sichergestellt werden, dass der Lastenträger nicht durch Unbefugte betätigt werden kann. Darüber hinaus kann die Verschließeinrichtung zu einer erhöhten Sicherheit führen, da sie im verschlossenen Zustand sicherstellen kann, dass der Arretierungsmechanismus nicht ungewollt freigegeben wird.

Der Lastenträger weist zwei komplementär zueinander ausgebildete Arretierungselemente auf. Bei diesen Elementen kann es sich um ein männliches und ein komplementär zu diesem ausgebildetes weibliches Arretierungselement handeln. Die komplementär zueinander ausgebildeten Arretierungselemente sind durch den Arretierungsmechanismus relativ zueinander translatorisch verstellbar. In einem Arretierungszustand des Arretierungsmechanismus greifen die Arretierungselemente ineinander, beispielsweise formschlüssig. In einer alternativen Ausgestaltung findet zwischen den Arretierungselementen im Arretierungszustand ein reibschlüssiger Eingriff statt. Mit der vorliegenden Ausführungsform kann somit ein Lastenträger bereitgestellt werden, der eine besonders zuverlässige und effektive Arretierung ermöglicht.

Die Arretierungselemente weisen einen Bolzen, beispielsweise einen zylindrischen Bolzen, sowie eine komplementär zum Bolzen ausgebildete Öffnung auf, beispielsweise ein Sackloch. Der Bolzen kann durch den Arretierungsmechanismus verstellbar, beispielsweise translatorisch verstellbar, ausgebildet sein. Die komplementär zum Bolzen ausgebildete Öffnung kann in der Stirnfläche des Lastentrageabschnitts vorgesehen sein.

In einer Ausführungsform weist der Lastenträger ferner eine Zentriereinrichtung zum aufeinander Ausrichten der komplementär zueinander ausgebildeten Arretierungselemente auf, wenn diese durch den Arretierungsmechanismus relativ zueinander bewegt werden, insbesondere aufeinander zu verstellt werden. Die Zentriereinrichtung kann als Fase ausgebildet sein, die beispielsweise an einem Ende des Bolzens vorgesehen sein kann.

Im Rahmen einer Ausführungsform weist der Lastenträger ferner eine Lagerbuchse auf, die beispielsweise als Hohlzylinder ausgebildet sein kann. Die Lagerbuchse kann einen zylindrischen Hohlraum aufweisen, der einen Durchmesser haben kann, welcher im Wesentlichen dem Außendurchmesser des zylindrischen Bolzens entsprechen kann. So kann der zylindrische Innenraum der Lagerbuchse als Führung für den zylindrischen Bolzen fungieren. In der Lagerbuchse der vorliegenden Ausführungsform ist eines der Arretierungselemente, beispielsweise der Bolzen, verschiebbar gelagert. Über einen Hebelmechanismus ist das Arretierungselement relativ zu der Lagerbuchse verstellbar, insbesondere translatorisch verstellbar. Dabei kann die Lagerbuchse derart ausgebildet und angeordnet sein, dass sie im montierten Zustand des Lastenträgers koaxial zu dem länglichen Lastentrageabschnitt angeordnet sein kann, wenn dieser sich beispielsweise in dem oben beschriebenen Zustellzustand befindet.

Der Hebelmechanismus gemäß einer der oben beschriebenen Ausführungsformen kann einen um eine Schwenkachse verschwenkbaren Hebel sowie ein mit dem Hebel mechanisch wirkverbundenes Verschiebeelement aufweisen. Mit dem Verschiebeelement kann eines der Arretierungselemente, beispielsweise der Bolzen, mechanisch wirkverbunden sein. Der Hebelmechanismus kann derart ausgebildet sein, dass eine Schwenkbewegung des Hebels um die Schwenkachse zu einer translatorischen Verschiebebewegung des Verschiebeelements führt. Beispielsweise ist das Verschiebeelement in einem in der Lagerbuchse vorgesehenen Langloch verschiebbar angeordnet und mit dem verschiebbaren Arretierungselement, beispielsweise dem Bolzen, mechanisch wirkverbunden. Bei dem Verschiebeelement kann es sich um ein Verschiebeglied handeln, welches beispielsweise in zwei gegenüberliegenden und in der Lagerbuchse ausgebildeten Langlöchern verschiebbar vorgesehen sein kann. Eine Verschwenkbewegung des Hebelmechanismus um die Schwenkachse wird dann in eine translatorische Verschiebebewegung des Verschiebeelements innerhalb des Langlochs der Lagerbuchse umgesetzt, wobei diese translatorische Verschiebebewegung des Verschiebeelements mit einer entsprechenden translatorischen Verstellbewegung des Arretierungselements einhergehen kann. So kann ein Arretierungsmechanismus für einen Lastenträger bereitgestellt werden, der einfach bedienbar ist, zu einer hohen Betätigungssicherheit führt und eine hohe Robustheit aufweist.

Im Rahmen einer Ausführungsform ist der Arretierungsmechanismus dabei selbstsichernd ausgebildet. Das bedeutet, dass während des bestimmungsgemäßen Betriebs auf den Arretierungsmechanismus wirkende Kräfte nicht auf den Arretierungszustand wirken und somit ein Öffnen des Arretierungsmechanismus nicht begünstigen. In anderen Worten ist der selbstsichernde Arretierungsmechanismus derart ausgebildet, dass während des bestimmungsgemäßen Betriebs auf den Mechanismus wirkende Kräfte keine Öffnungskräfte des Mechanismus darstellen, die ein Öffnen des Mechanismus begünstigen. So kann ein Arretierungsmechanismus mit hoher Sicherheit bereitgestellt werden.

In einer Ausführungsform weist der Hebelmechanismus ein Verbindungsglied auf, das um eine erste Drehachse drehbar an dem Hebel und um eine zweite Drehachse drehbar an dem Verschiebeelement gelagert ist. Insbesondere handelt es sich bei dem Verbindungsglied um ein einstückiges und starres Element, wobei hier auch andere Ausgestaltungen denkbar sind. Bei dem Verbindungsglied kann es sich um ein gewinkeltes Glied mit einem zwischen zwei Schenkeln vorliegenden Winkel von größer 90°, beispielsweise von ca. 135°, handeln. An den Enden der beiden Schenkel können die Endpunkte des Verbindungsglieds jeweils drehbar um eine Drehachse an dem Hebel beziehungsweise dem Verbindungsglied angebunden sein. Zur Ausbildung der zuvor beschriebenen selbstsichernden Art können die erste Drehachse, mit welcher der Hebel an das Verbindungsglied angebunden ist, die zweite Drehachse, mit welcher das Verbindungsglied an das Verschiebeelement angebunden ist, und die Schwenkachse, um welche der Hebel verschwenkbar ist, im arretierten Zustand des Arretierungsmechanismus auf einer Gerade angeordnet sein. Die Gerade kann beispielsweise achsparallel zur Längserstreckungsrichtung der Lagerbuchse und/oder zur Längserstreckungsrichtung des Lastentrageabschnitts, wenn sich dieser im Zustellungszustand befindet, angeordnet sein. Mit dieser Ausführungsform kann eine selbstsichernde Ausgestaltung in einer einfachen Art und Weise bereitgestellt werden.

Im Rahmen einer Ausführungsform weist der Lastenträger einen Sicherungsmechanismus zum Sichern des Hebels in dessen Arretierungsstellung auf. Der Sicherungsmechanismus kann als lösbarer Einrastmechanismus ausgebildet sein. In einer Ausführungsform weist der Sicherungsmechanismus zwei formschlüssig miteinander in Eingriff bringbare Sicherungselemente auf, wobei eines der Sicherungselemente an dem Hebel und das andere Sicherungselement beispielsweise an dem Lastentrageabschnitt angeordnet sein kann. Über den Sicherungsmechanismus kann der Arretierungsmechanismus in dessen arretierter Stellung gehalten werden. So kann beispielsweise sichergestellt werden, dass der Arretierungsmechanismus nicht durch äußere ungewollte Einwirkungen geöffnet wird. Der Sicherungsmechanismus kann ein Betätigungselement, beispielsweise einen Betätigungsknopf, aufweisen, über den der Sicherungsmechanismus freigegeben werden kann. Bei dem Betätigungselement kann es sich um ein mechanisches Bauteil handeln, welches über eine mechanische Wirkkette den Sicherungsmechanismus freigibt. Alternativ oder zusätzlich kann es sich bei dem Betätigungselement um ein elektronisches Bauelement handeln, welches über ein elektronisches Steuersignal den Sicherungsmechanismus freigeben kann.

In einer Ausführungsform weist der Arretierungsmechanismus eine Anschlagfläche auf, die insbesondere komplementär zur Außenkontur des Lastentrageabschnitts ausgebildet sein kann. Die Anschlagfläche kann beispielsweise eine kreisrunde Form aufweisen, sofern der längliche Lastentrageabschnitt beispielsweise einen kreisrunden Querschnitt aufweist. Auch andere Ausgestaltungen sind hier möglich. Die Anschlagfläche kann derart ausgebildet sein, dass der Lastentrageabschnitt im an die Anschlagfläche anliegenden Zustand auf ein Arretierungselement des Arretierungsmechanismus, beispielsweise auf den Bolzen, ausgerichtet sein kann. So kann mittels der Anschlagfläche sichergestellt werden, dass bei Betätigung des Arretierungsmechanismus ein beispielsweise formschlüssiger Eingriff der Arretierungselemente herbeigeführt werden kann.

Im Rahmen einer Ausführungsform weist der Lastentrageabschnitt eine Anhängerkupplung auf, die insbesondere als eine Kugelkopfkupplung ausgebildet sein kann. Die Anhängerkupplung kann permanent fest an dem Lastentrageabschnitt montiert sein. Alternativ kann die Anhängerkupplung auch demontierbar an dem Lastentrageabschnitt vorgesehen sein. Im Rahmen einer Ausführungsform ist der Lastenträger derart ausgebildet, dass der Fahrzeugbefestigungsabschnitt in Querrichtung des Fahrzeugs an einem Ende und der Arretierungsmechanismus an dem anderen Ende des Fahrzeugs befestigbar ist, so dass sich der Lastentrageabschnitt im arretierten Zustand im Wesentlichen entlang der gesamten Fahrzeugbreite erstreckt. Alternativ oder zusätzlich weist der Lastenträger ferner einen Fahrradträger auf, der an dem Lastentrageabschnitt, beispielsweise an einer Anhängerkupplung des Lastentrageabschnitts, befestigt ist. Hinsichtlich der Ausgestaltung und der Vorteile der einzelnen Elemente wird auf die obigen Ausführungen verwiesen.

Die vorliegende Erfindung bezieht sich ferner auf ein Fahrzeug mit einem Lastenträger gemäß einer der zuvor beschriebenen Ausführungsformen. Der Lastenträger kann an einem Fahrzeugheck, insbesondere an dem Heck eines Fahrzeugchassis, angebracht sein. Das Fahrzeug weist bevorzugt mindestens eine Hecktür auf, die sich durch Verschwenkung des Lastentrageabschnitts auch dann öffnen lässt, wenn auf dem Lastentrageabschnitt eine Last, insbesondere ein Fahrrad mittels eines Fahrradträgers, montiert ist. Das Fahrzeug und der Lastenträger können gemäß einer der obigen Ausführungsformen ausgebildet sein. Es wird auf die entsprechenden Details und Vorteile der obigen Ausführungsformen verwiesen.

### Kurze Beschreibung der Zeichnungen

Fig. 1 zeigt ein Fahrzeug mit einem Lastenträger in einem ersten Zustand in einer perspektivischen Rückansicht.
Fig. 2 zeigt das Fahrzeug mit dem Lastenträger aus Fig. 1 in einem zweiten Zustand in einer perspektivischen Rückansicht.
Fig. 3 zeigt das Fahrzeug mit dem Lastenträger aus Figs. 1 und 2 in dem Zustand aus Fig. 2 in einer weiteren perspektivischen Rückansicht.
Fig. 4 zeigt einen Abschnitt des Lastenträgers aus Figs. 1 bis 3 in dem Zustand aus Fig. 3.
Fig. 5 zeigt den Abschnitt des Lastenträgers aus Fig. 4 in einem weiteren Zustand.
Fig. 6 zeigt einen Abschnitt des Lastenträgers aus Figs. 1 bis 3 in einem weiteren Zustand.
Fig. 7 zeigt den Arretierungsmechanismus des Lastenträgers aus Figs. 1 bis 3 in einem entriegelten Zustand.
Fig. 8 zeigt den Arretierungsmechanismus des Lastenträgers aus Figs. 1 bis 3 in einem verriegelten Zustand.
Fig. 9 zeigt eine Verschließeinrichtung des Arretierungsmechanismus des Lastenträgers aus Figs. 1 bis 3.

### Detaillierte Beschreibung von Ausführungsformen

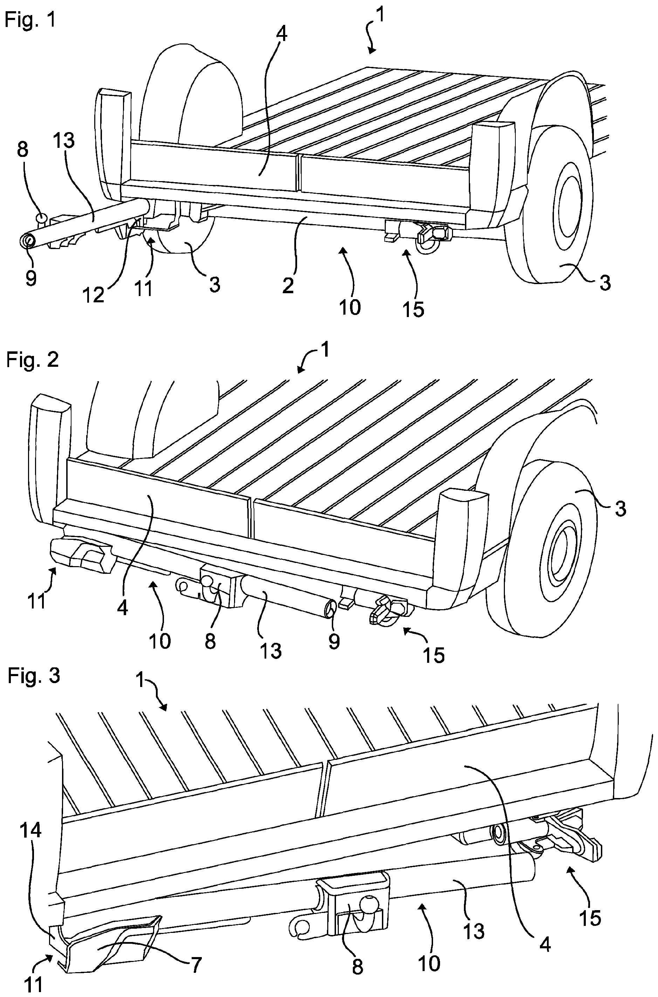

Fig. 1 zeigt ein Fahrzeug 1 in einer perspektivischen Rückansicht, wobei im Wesentlichen lediglich das Chassis des Fahrzeugs, der Fahrzeugaufbau jedoch nicht zu sehen ist. Das Fahrzeug 1 umfasst einen Fahrzeugrahmen mit einer in Fig. 1 zu sehenden hinteren Querstrebe 2, die sich im Wesentlichen von der linken zur rechten Seite des Fahrzeugs 1 erstreckt. Am Fahrzeugchassis 2 sind ferner sowohl links als auch rechts Hinterräder 3 drehbar gelagert. Bei dem Fahrzeug 1 handelt es sich in der vorliegenden Ausführungsform um einen Kastenwagen, der am Fahrzeugheck eine Tür 4 aufweist, von welcher in Figs. 1 bis 3 lediglich ein unterer Abschnitt gezeigt ist. Die Tür 4 ist in der vorliegenden Ausführungsform zweiflüglig ausgebildet und öffnet sich nach außen.

Darüber hinaus umfasst das Fahrzeug 1 der vorliegenden Ausführungsform einen Lastenträger 10, der am Heck des Fahrzeugs 1 angebracht ist. In der vorliegenden Ausführungsform ist der Lastenträger 10 an der Querstrebe 2 des Fahrzeugrahmens montiert. Der Lastenträger 10 umfasst einen Fahrzeugbefestigungsabschnitt 11, einen länglichen Lastentrageabschnitt 13, der in der vorliegenden Ausführungsform als Schwingarm ausgebildet ist, und einen Arretierungsmechanismus 15. Der Fahrzeugbefestigungsabschnitt 11 ist auf der linken Seite des Fahrzeughecks an der Querstrebe 2 befestigt. Auf der rechten Seite des Fahrzeughecks ist der Arretierungsmechanismus 15 an der Querstrebe 2 befestigt. Der Schwingarm 13 ist über den Fahrzeugbefestigungsabschnitt 11 an dem Querträger 2 befestigt, in der vorliegenden Ausführungsform über eine Schwenklagerung 12.

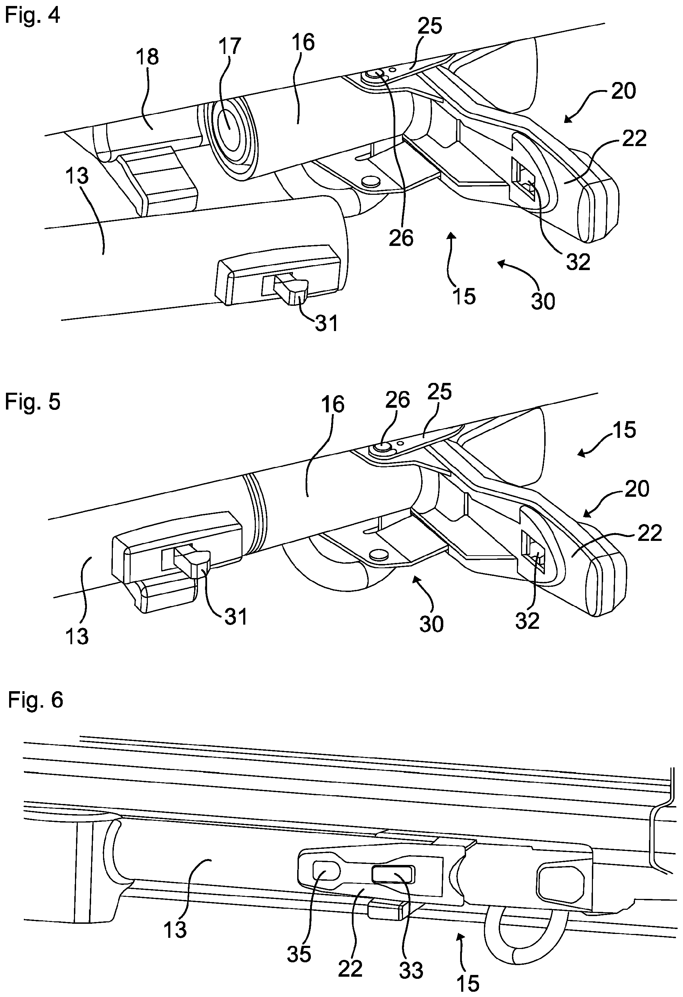

Über die Schwenklagerung 12 ist der Schwingarm 13 um eine senkrecht zur Querrichtung des Fahrzeugs 1 verlaufende Schwenkachse schwenkbar. Die Schwenkbarkeit des Schwingarms 13 ist aus einem Vergleich der Positionen des Schwingarms 13 in den in Figs. 1, 2, 3, 4, 5 und 6 gezeigten Zuständen ersichtlich. Genauer gesagt kann der Schwingarm 13 zwischen einem in Fig. 1 gezeigten Ausstellzustand, bei welchem der Schwingarm 13 im Wesentlichen im rechten Winkel zur Querstrebe 2 angeordnet ist, und einem in Figs. 5 und 6 gezeigten Zustellzustand, bei welchem der Schwingarm 13 im Wesentlichen parallel zur Querstrebe 2 angeordnet ist, verschwenkt werden. Der Fahrzeugbefestigungsabschnitt 11 ist derart ausgebildet, dass dieser einen Anschlag 14 für eine an dem Schwingarm 13 angebrachte Kappe 7 ausbildet (vgl. Fig. 3). Kommen der Anschlag 14 und die Kappe 7 beim Ausstellen des Schwingarms 13 miteinander in Kontakt, wird so eine weitere Ausstellbewegung des Schwingarms 13 unterbunden und eine Endausstellposition definiert. Diese Endausstellposition ist in Fig. 1 gezeigt und entspricht einem Zustand, bei dem der Schwingarm 13 im Wesentlichen mit einem 90°-Winkel zur Querstrebe 2 angeordnet ist.

An dem Schwingarm 13 ist eine Anhängerkupplung 8 angebracht, die insbesondere als Kugelkopfkupplung ausgebildet ist. Die Kugelkopfkupplung ist dabei derart an dem Schwingarm 13 montiert, dass sie sich bei dem in Figs. 5 und 6 gezeigten Zustellzustand des Schwingarms 13 in der Mitte des Fahrzeughecks befindet. Wie im Folgenden beschrieben, kann der Schwingarm 13 über den Arretierungsmechanismus 15 in dem in Fig. 5 gezeigten Zustellzustand arretiert werden. Ist der Arretierungsmechanismus 15 hingegen geöffnet, kann der Schwingarm 13 in den in Fig. 1 gezeigten Ausstellzustand verschwenkt werden. In dem in Fig. 1 gezeigten Ausstellzustand ist die am Schwingarm 13 angebrachte Anhängerkupplung 8 aus dem Bewegungsraum der zweiflügligen Hecktür 4 des Fahrzeugs 1 herausgeschwenkt.

Demnach interferieren insbesondere auf der Anhängerkupplung 8 angebrachte Einrichtungen, wie beispielsweise ein auf der Anhängerkupplung 8 montierter Fahrradträger mit darauf gegebenenfalls befestigten Fahrrädern, nicht mit der Hecktür 4 des Fahrzeugs 1. In anderen Worten kann die Hecktür 4 des Fahrzeugs 1 störungsfrei geöffnet und geschlossen werden, wenn sich der Schwingarm 13 in dem in Fig. 1 gezeigten Ausstellzustand befindet, obwohl auf der Anhängerkupplung 8 montierte Einrichtungen ein Öffnen der Hecktür 4 des Fahrzeugs 1 in dem in Figs. 5 und 6 gezeigten Zustellzustand des Schwingarms 13 unterbinden würden. Ist auf der Anhängerkupplung 8 beispielsweise ein Fahrradträger mit darauf vorgesehenen Fahrrädern montiert und soll eine Zugänglichkeit eines Kofferraums des Fahrzeugs 1 durch Öffnen der Hecktür 4 ermöglicht werden, so kann mit dem Lastenträger 10 der vorliegenden Erfindung der Schwingarm 13 durch Freigeben des Arretierungsmechanismus 15 in den in Fig. 1 gezeigten Ausstellzustand verschwenkt werden, um so die Hecktür 4 des Fahrzeugs 1 freizulegen. In diesem Zustand ist nun ein ungehindertes Öffnen der Hecktür 4 des Fahrzeugs 1 trotz montierter Lastentrageeinrichtung, beispielsweise trotz montiertem Fahrradträger, an der Fahrzeugkupplung 8 möglich.

Wie in Figs. 1 bis 5 zu sehen, weist der Schwingarm 13 in der vorliegenden Ausführungsform einen kreisförmigen Querschnitt auf. An seinem proximalen Ende ist er über die Schwenklagerung 12 mit dem Fahrzeugbefestigungsabschnitt 11 verschwenkbar gekoppelt. An seinem distalen Ende weist der Schwenkarm 13 eine kreisrunde Stirnfläche auf.

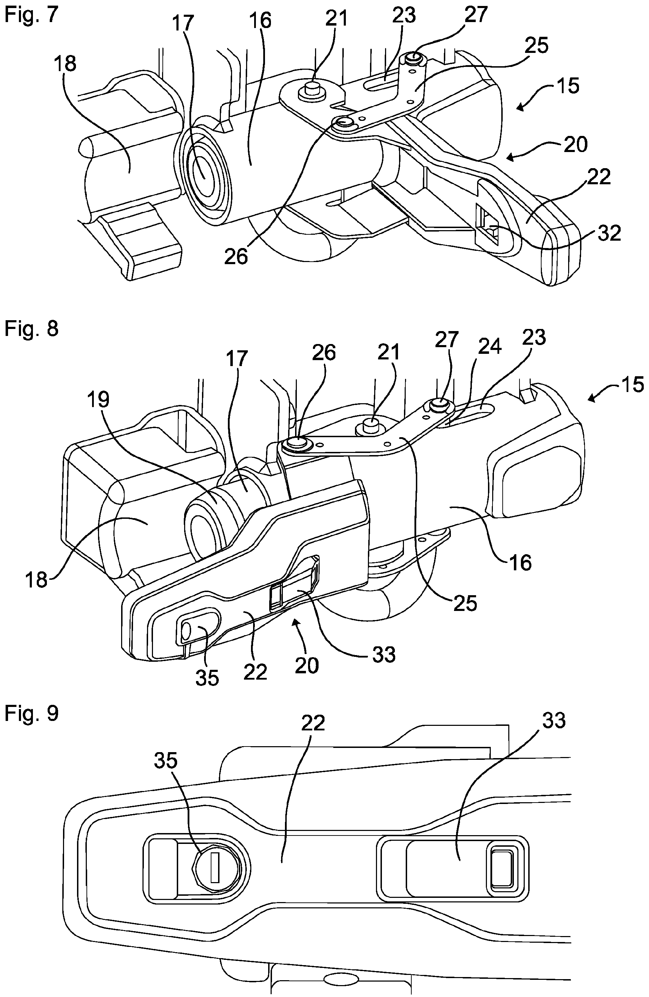

Figs. 4-6 zeigen den Arretierungsmechanismus 15 des Lastenträgers 10 aus Fig. 1 bis 3 in vergrößerter Darstellung. Der Arretierungsmechanismus 15 umfasst eine fest am Querträger 2 angebrachte Lagerbuchse 16, die in der vorliegenden Ausführungsform mit kreisförmigem Querschnitt und einem dem Schwingarm 13 entsprechenden Außendurchmesser ausgebildet ist. Die Lagerbuchse 16 ist so angeordnet, dass deren Längserstreckungsrichtung parallel zur Längserstreckungsrichtung des Querträgers 2 und damit auch zur Längserstreckungsrichtung des Schwingarms 13, wenn sich dieser in dem in Fig. 5 gezeigten Zustellzustand befindet, angeordnet ist. Darüber hinaus umfasst der Lastenträger 10 zwei Arretierungselemente. Bei dem ersten Arretierungselement handelt es sich um einen Bolzen 17, der in der vorliegenden Ausführungsform mit einer zylindrischen Form ausgebildet ist. Der zylindrische Bolzen 17 ist translatorisch verschiebbar in der Lagerbuchse 16 gelagert. Wie im Folgenden im Detail beschrieben, ist der zylindrische Bolzen 17 zwischen einer Arretierungsstellung, die in Fig. 8 gezeigt ist und bei welcher der Bolzen 17 aus der Lagerbuchse 16 herausragt, und einer in Fig. 7 gezeigten Freigabestellung, bei welcher der Bolzen 17 im Wesentlichen vollständig innerhalb der Lagerbuchse 16 aufgenommen ist, verstellbar. Bei dem zweiten Arretierungselement handelt es sich um eine komplementär zum Bolzen 17 ausgebildete Öffnung 9, die in der Stirnfläche des Schwingarms 13 als Sackloch ausgebildet ist. Bolzen 17 und Sackloch 9 sind dabei derart aufeinander abgestimmt, dass der Bolzen 17 in seiner in Fig. 8 gezeigten Arretierungsstellung in dem in der Stirnfläche ausgebildeten Sackloch 9 aufgenommen werden kann.

Darüber hinaus weist der Arretierungsmechanismus 15 eine Anschlagfläche 18 für den Schwingarm 13 auf. Die Anschlagfläche 18 ist komplementär zur Außenkontur des Schwingarms 13 ausgebildet, also vorliegend mit einer kreisrunden Form. Dabei sind die Anschlagfläche 18, die Lagerbuchse 16 sowie die Arretierungselemente 9 und 17 so aufeinander abgestimmt, dass der zylindrische Bolzen 17 auf die in der Stirnfläche des Schwingarms vorgesehene Öffnung 9 ausgerichtet ist, wenn der Schwingarm 13 an der Anschlagfläche 18 anliegt.

Durch Überführen des Arretierungsmechanismus 15 in die in Figs. 4 und 5 gezeigte Freigabestellung kann der Schwingarm 13 um die Schwenklagerung 12 des Fahrzeugbefestigungsabschnitts 11 in den in Fig. 1 gezeigten Ausstellzustand überführt werden. Wird der Schwenkarm 13 durch einen Nutzer nun erneut in den in Fig. 5 gezeigten Zustellzustand durch eine Schwenkbewegung um das Schwenklager 12 des Fahrzeugbefestigungsabschnitts 11 verschwenkt und in Kontakt mit der Anschlagfläche 18 gebracht, kann der Arretierungsmechanismus 15 anschließend in dessen in Fig. 6 gezeigte Arretierungsstellung überführt werden, bei welchem der zylindrische Bolzen 17 in die in der Stirnfläche ausgebildete Öffnung 9 eindringt und damit ein Verschwenken des Schwingarms 13 unterbindet. Um ein Eindringen des Bolzens 17 in die in der Stirnfläche ausgebildete Öffnung 9 zu erleichtern, ist an der dem Schwingarm 13 zugewandten Seite des Bolzens 17 eine Zentriereinrichtung vorgesehen, die in der vorliegenden Ausführungsform als Fase 19 ausgebildet ist (siehe Fig. 8). Über die Fase 19 werden die beiden Arretierungselemente, also der Bolzen 17 sowie die in der Stirnfläche ausgebildete Öffnung 9, beim Überführen des Arretierungsmechanismus 15 in die in Fig. 8 gezeigte Arretierungsstellung, also beim translatorischen Herausschieben des Bolzens 17 aus der Lagerbuchse 16, aufeinander ausgerichtet, um so ein formschlüssiges Eingreifen der Arretierungselemente ineinander herbeizuführen.

Zum Überführen des Arretierungsmechanismus 15 von dem in Fig. 7 gezeigten Freigabezustand in den in Fig. 8 gezeigten Arretierungszustand und zurück weist der Arretierungsmechanismus einen Hebelmechanismus 20 auf. Der Hebelmechanismus 20 umfasst einen um eine Schwenkachse 21 schwenkbaren Hebel 22. Die Achse 21 ist dabei im Wesentlichen senkrecht zur Längserstreckungsrichtung des Querträgers 2 angeordnet. In der Lagerbuchse 16 ist in der vorliegenden Ausführungsform ein Langloch 23 vorgesehen, welches sowohl an der Ober- als auch der Unterseite der Lagerbuchse 16 ausgebildet ist und sich im Wesentlichen parallel zur Längserstreckungsrichtung der Lagerbuchse 16 erstreckt. In dem Langloch 23 ist ein in Fig. 8 zu sehendes Verschiebeelement 24 angeordnet, welches mit dem Bolzen 17 mechanisch wirkverbunden ist. Durch translatorische Bewegung des Verschiebeelements 24 in dem Langloch 23 kann demnach das Arretierungselement 17 translatorisch zwischen der in Fig. 7 gezeigten Freigabestellung und der in Fig. 8 gezeigten Arretierungsstellung verstellt werden.

Diese translatorische Verstellbewegung des Verschiebeelements 24 in dem Langloch 23 wird durch eine Schwenkbewegung des Hebels 22 um die Schwenkachse 21 herbeigeführt. Hierfür ist ein im vorliegenden Fall starres Verbindungsglied 25 vorgesehen, welches drehbar an dem Verschiebeelement 24 und drehbar an dem Hebel 22 angebunden ist. Die Anbindung an den Hebel 22 ist dabei exzentrisch zur Schwenkachse 21 ausgebildet, um so eine Schwenkbewegung des Hebels 22 um die Schwenkachse 21 mittels des Verbindungsglieds 25 in eine translatorische Bewegung des Verschiebeelements 24 in der Lagerbuchse 23 umlenken zu können. Das starre Verbindungsglied 25 ist dabei um eine erste Drehachse 26 drehbar an dem Hebel 20 und um eine zweite Drehachse 27 drehbar an dem Verschiebeelement 24 angebracht.

Der Arretierungsmechanismus 15 ist in der vorliegenden Ausführungsform selbstsichernd ausgebildet, so dass während des Betriebs des Lastenträgers 10 auftretende Belastungen ein Öffnen des Arretierungsmechanismus 15 nicht begünstigen. Hierfür sind sowohl die beiden Drehachsen 26 und 27, über welche das Verbindungsglied 25 an den Hebel 22 und das Verschiebeelement 24 angebunden ist, als auch die Schwenkachse 21, um welche der Hebel 22 schwenkbar an der Lagerbuchse 16 angebunden ist, in dem in Fig. 8 gezeigten Arretierungszustand des Arretierungsmechanismus 15 auf einer Geraden angeordnet, welche im Wesentlichen parallel zur Längserstreckungsrichtung der Lagerbuchse 16, parallel zur Längserstreckungsrichtung des Querträgers 2 und parallel zur Längserstreckungsrichtung des sich im zugestellten Zustand befindenden Schwingarms 13 angeordnet ist.

Darüber hinaus weist der Lastenträger 10 einen Sicherungsmechanismus 30 auf, mittels dem der Arretierungsmechanismus 15 in seiner Arretierungsstellung gesichert werden kann. Der Sicherungsmechanismus 30 ist in der vorliegenden Ausführungsform als lösbarer Einrastmechanismus ausgebildet, der zwei formschlüssig miteinander in Eingriff bringbare Sicherungselemente 31 und 32 aufweist. Das eine Sicherungselement 31 ist an dem distalen Ende des Schwingarms 13 vorgesehen und in der vorliegenden Ausführungsform als Haken ausgebildet, der entgegen einer Federkraft zwischen einer Sicherungs- und einer Freigabestellung verschiebbar ist. Das andere Sicherungselement 32 ist in Form einer Öffnung mit einer Führungsfläche in dem Hebel 22 ausgebildet. Wird der Hebel 22 von der in Figs. 4, 5 und 7 gezeigten Öffnungsstellung in die in Figs. 6 und 8 gezeigte Schließstellung durch eine Schwenkbewegung um die Schwenkachse 21 bewegt, greift die Führungsfläche des Sicherungselements 32 mit dem Haken 31 ein und verschiebt diesen entgegen der Federkraft derart, dass der Haken in das als Öffnung ausgebildete Sicherungselement 32 eingreift. Ein hervorstehender Abschnitt des Hakens 31 hintergreift dabei im eingegriffenen Zustand die Führungsfläche des Sicherungselements 32 und hält den Hebel 22 damit in seiner arretierten Stellung. Durch Drücken eines auf der Vorderseite des Hebels 22 vorgesehenen Betätigungselements 33 wird die Führungsfläche des Sicherungselements 32 verschoben, um so den Eingriff mit dem Haken 31 aufzulösen und eine Schwenkbewegung des Hebels 22 erneut zu ermöglichen.

Der Arretierungsmechanismus 15 weist ferner eine Verschließeinrichtung 35 auf, über welche der Arretierungsmechanismus 15 in seiner arretierten Stellung abgeschlossen werden kann. Hierfür ist ein mittels eines Schlüssels bedienbares Schloss vorgesehen, welches insbesondere in Fig. 9 gezeigt ist. Durch Betätigen des Schlosses 35 kann die Führungsfläche des Sicherungselements 32 in ihrer arretierten Stellung fixiert werden, so dass ein Betätigen des Betätigungselements 33 zum Freigeben des Sicherungselements 32 unterbunden werden kann. Hierfür ist ein mechanisch verschiebbares Bauteil vorgesehen, welches eine Drückbewegung des Betätigungselements 33 im verschlossenen Zustand des Schlosses 35 verhindert. Wird das Schloss 35 hingegen mittels des Schlüssels aufgeschlossen, ist ein Drücken des Betätigungselements 33 wieder möglich, um so das Sicherungselement 32 in seine Freigabeposition zu überführen.

## Patentansprüche

1. Lastenträger (10) für ein Fahrzeug (1), insbesondere für ein Heck (2) eines Kastenwagens, aufweisend
einen Fahrzeugbefestigungsabschnitt (11) zum Befestigen des Lastenträgers (10) an dem Fahrzeug (1);
einen länglichen Lastentrageabschnitt (13), insbesondere einen Schwingarm, mit einer Stirnfläche, der relativ zu dem Fahrzeugbefestigungsabschnitt (11) insbesondere zwischen einem Zustellzustand und einem Ausstellzustand verschwenkbar ist; und
einen Arretierungsmechanismus (15) zum Arretieren des Lastentrageabschnitts (13), insbesondere des distalen Endes des Schwingarms, wobei der Lastenträger (10) einen Bolzen (17) und eine komplementär zum Bolzen (17) ausgebildete Öffnung (9) aufweist, die durch den Arretierungsmechanismus (15) relativ zueinander translatorisch verstellbar sind und in einem Arretierungszustand des Arretierungsmechanismus (15) ineinandergreifen, um den Lastentrageabschnitt (13) von dessen Stirnseite aus zu arretieren.

2. Lastenträger (10) nach Anspruch 1, wobei die zwei komplementär zueinander ausgebildeten Arretierungselemente (9, 17) in dem Arretierungszustand des Arretierungsmechanismus (15) formschlüssig ineinandergreifen.

3. Lastenträger (10) nach Anspruch 2, wobei die Arretierungselemente einen zylinderförmigen Bolzen (17), der insbesondere durch den Arretierungsmechanismus (15) verstellbar ist, und eine komplementär zum Bolzen ausgebildete Öffnung (9) umfassen, die in der Stirnfläche des Lastentrageabschnitts (13) ausgebildet ist.

4. Lastenträger (10) nach einem der Ansprüche 2 bis 3, ferner mit einer Zentriereinrichtung (19) zum aufeinander Ausrichten der komplementär zueinander ausgebildeten Arretierungselemente (9, 17), wenn diese durch den Arretierungsmechanismus (15) aufeinander zu bewegt werden, wobei die Zentriereinrichtung bevorzugt als Fase (19) an einem Ende des Bolzens (17) ausgebildet ist.

5. Lastenträger (10) nach einem der Ansprüche 2 bis 4, ferner mit einer Lagerbuchse (16), in welcher eines der Arretierungselemente (17) verschiebbar gelagert ist, wobei das Arretierungselement (17) über einen Hebelmechanismus (20) relativ zu der Lagerbuchse (16) insbesondere translatorisch verstellbar ist und/oder wobei die Lagerbuchse (16) insbesondere koaxial zum Lastentrageabschnitt (13) angeordnet ist, wenn sich dieser in dem Zustellzustand befindet.

6. Lastenträger (10) nach Anspruch 5, wobei der Hebelmechanismus (19) einen um eine Schwenkachse (21) verschwenkbaren Hebel (22) sowie ein mit dem Hebel (22) mechanisch wirkverbundenes Verschiebeelement (24) aufweist, welches ausgebildet ist, um bei einer Schwenkbewegung des Hebels (22) um die Schwenkachse (21) eine insbesondere translatorische Verschiebebewegung durchzuführen, wobei das Verschiebeelement (24) insbesondere in einem in der Lagerbuchse (16) vorgesehenen Langloch (23) angeordnet und mit dem verschiebbaren Arretierungselement (17) mechanisch wirkverbunden ist, sodass eine Schwenkbewegung des Hebels (22) um die Schwenkachse (21) zu einer translatorischen Verschiebebewegung des verschiebbaren Arretierungselements (17) führt.

7. Lastenträger (10) nach einem der vorhergehenden Ansprüche, wobei der Arretierungsmechanismus (15) selbstsichernd ausgebildet ist, sodass während des Betriebs des Lastenträgers (10) auftretende Belastungen ein Öffnen des Arretierungsmechanismus (15) nicht begünstigen.

8. Lastenträger (10) nach Ansprüchen 6 und 7, wobei der Hebelmechanismus (20) ein Verbindungsglied (25) aufweist, das um eine erste Drehachse (26) drehbar an dem Hebel (20) und um eine zweite Drehachse (27) drehbar an dem Verschiebeelement (24) gelagert ist, wobei die beiden Drehachsen (26, 27) und die Schwenkachse (21) im arretierten Zustand des Arretierungsmechanismus (15) auf einer Geraden angeordnet sind, die achsparallel zur Lagerbuchse (16) und/oder zum Lastentrageabschnitt (13) verläuft, wenn sich dieser in dem Zustellzustand befindet.

9. Lastenträger (10) nach einem der Ansprüche 6 bis 8, ferner mit einem Sicherungsmechanismus (30) zum Sichern des Hebels (22) in dessen Arretierungsstellung, wobei der Sicherungsmechanismus (30) bevorzugt als lösbarer Einrastmechanismus ausgebildet ist und/oder bevorzugt zwei insbesondere formschlüssig miteinander in Eingriff bringbare Sicherungselemente (31, 32) aufweist, wobei das eine Sicherungselement (32) bevorzugt an dem Hebel (22) und das andere Sicherungselement (31) bevorzugt an dem Lastentrageabschnitt (13) angeordnet ist, wobei der Sicherungsmechanismus (30) über ein Betätigungselement (33), insbesondere einen Betätigungsknopf, freigebar ist.

10. Lastenträger (10) nach einem der vorhergehenden Ansprüche, wobei der Arretierungsmechanismus (15) eine Anschlagfläche (18) aufweist, die bevorzugt komplementär zur Außenkontur des Lastentrageabschnitts (13) ausgebildet ist, wobei die Arretierungselemente (9, 17) bevorzugt zueinander ausgerichtet sind, wenn der Lastentrageabschnitt (13) an der Anschlagfläche (18) anliegt.

11. Lastenträger (10) nach einem der vorhergehenden Ansprüche, wobei der Lastentrageabschnitt (13) eine Anhängerkupplung (8), insbesondere eine Kugelkopfkupplung, aufweist, der Lastenträger (10) derart ausgebildet ist, dass der Fahrzeugbefestigungsabschnitt (11) in Querrichtung des Fahrzeugs (1) an einem Ende und der Arretierungsmechanismus (15) an dem anderen Ende des Fahrzeugs (1) befestigbar ist, sodass sich der Lastentrageabschnitt (13) im zugestellten Zustand im Wesentlichen entlang der gesamten Fahrzeugbreite erstreckt, und/oder der Lastenträger (10) bevorzugt einen an dem Lastentrageabschnitt (13) angebrachten Fahrradträger aufweist.

12. Fahrzeug (1) mit einem Lastenträger (10) nach einem der vorhergehenden Ansprüche, wobei der Lastenträger (10) am Fahrzeugheck (2), insbesondere am Fahrzeugchassis, angebracht ist, wobei das Fahrzeug (1) bevorzugt mindestens eine Hecktür (4) aufweist, die sich durch Verschwenkung des Lastentrageabschnitts (13) in den Ausstellzustand auch dann öffnen lässt, wenn auf dem Lastentrageabschnitt (13) eine Last, insbesondere ein Fahrrad mittels eines Fahrradträger, montiert ist.

## Claims

1. Load carrier (10) for a vehicle (1), in particular for a rear (2) of a van, having
a vehicle fastening portion (11) for fastening the load carrier (10) to the vehicle (1);
an elongate load-carrying portion (13), in particular a swing arm, which comprises an end face and is pivotable relative to the vehicle fastening portion (11), in particular between a stowed state and a deployed state; and
a locking mechanism (15) for locking the load-carrying portion (13), in particular the distal end of the swing arm, wherein the load carrier (10) has a bolt (17) and an opening (9) complementary to the bolt (17) which are translationally movable relative to each other by the locking mechanism (15) and in a locking state of the locking mechanism (15) engage in each other in order to lock the load-carrying portion (13) from its end side.

2. Load carrier (10) according to claim 1, wherein the two mutually complementary locking elements (9, 17) form-fittingly engage in each other in the locking state of the locking mechanism (15).

3. Load carrier (10) according to claim 2, wherein the locking elements comprise a cylindrical bolt (17) which is movable in particular by the locking mechanism (15) and an opening (9) which is complementary to the bolt and is formed in the end face of the load-carrying portion (13).

4. Load carrier (10) according to either of claims 2 to 3, further comprising a centering device (19) for aligning the mutually complementary locking elements (9, 17) when said elements are moved toward each other by the locking mechanism (15), wherein the centering device is preferably in the form of a chamfer (19) at one end of the bolt (17).

5. Load carrier (10) according to any of claims 2 to 4, further comprising a bearing bushing (16) in which one of the locking elements (17) is slidably mounted, wherein the locking element (17) is in particular translationally movable relative to the bearing bushing (16) via a lever mechanism (20) and/or wherein the bearing bushing (16) is arranged in particular coaxially with respect to the load-carrying portion (13) when said portion is in the stowed state.

6. Load carrier (10) according to claim 5, wherein the lever mechanism (19) has a lever (22) pivotable about a pivot shaft (21) and a sliding element (24) which is mechanically operatively connected to the lever (22) and is designed to perform an in particular translational sliding movement during a pivoting movement of the lever (22) about the pivot shaft (21), wherein the sliding element (24) is arranged in particular in a slot (23) provided in the bearing bushing (16) and is mechanically operatively connected to the slidable locking element (17), with the result that a pivoting movement of the lever (22) about the pivot shaft (21) results in a translational sliding movement of the slidable locking element (17).

7. Load carrier (10) according to any of the preceding claims, wherein the locking mechanism (15) is self-securing, with the result that loads occurring during the operation of the load carrier (10) do not facilitate the opening of the locking mechanism (15).

8. Load carrier (10) according to claims 6 and 7, wherein the lever mechanism (20) has a connecting member (25) which is mounted on the lever (20) so as to be rotatable about a first rotation shaft (26) and mounted on the sliding element (24) so as to be rotatable about a second rotation shaft (27), wherein the two rotation shafts (26, 27) and the pivot shaft (21) in the locked state of the locking mechanism (15) are arranged on a straight line which runs axially parallel to the bearing bushing (16) and/or to the load-carrying portion (13) when said portion is in the stowed state.

9. Load carrier (10) according to any of claims 6 to 8, further comprising a securing mechanism (30) for securing the lever (22) in its locking position, wherein the securing mechanism (30) is preferably in the form of a releasable latching mechanism and/or preferably has two securing elements (31, 32) that can brought into form-fitting engagement with each other, wherein the one securing element (32) is preferably arranged on the lever (22) and the other securing element (31) is preferably arranged on the load-carrying portion (13), wherein the securing mechanism (30) is releasable via an actuating element (33), in particular an actuating button.

10. Load carrier (10) according to any of the preceding claims, wherein the locking mechanism (15) has a stop face (18) which is preferably complementary to the outer contour of the load-carrying portion (13), wherein the locking elements (9, 17) are preferably aligned with each other when the load-carrying portion (13) rests against the stop face (18).

11. Load carrier (10) according to any of the preceding claims, wherein the load-carrying portion (13) has a trailer coupling (8), in particular a ball head coupling, the load carrier (10) is designed in such a way that the vehicle fastening portion (11) in the transverse direction of the vehicle (1) is fastenable at one end and the locking mechanism (15) is fastenable at the other end of the vehicle (1), with the result that the load-carrying portion (13) in the stowed state extends substantially along the entire vehicle width, and/or the load carrier (10) preferably has a bicycle carrier attached to the load-carrying portion (13).

12. Vehicle (1) comprising a load carrier (10) according to any of the preceding claims, wherein the load carrier (10) is attached to the vehicle rear (2), in particular to the vehicle chassis, wherein the vehicle (1) preferably has at least one rear door (4) which can be opened by pivoting the load-carrying portion (13) into the deployed position, even when a load, in particular a bicycle via a bicycle carrier, is mounted on the load-carrying portion (13).

## Revendications

1. Porte-charge (10) pour un véhicule (1), en particulier pour l'arrière (2) d'un fourgon, présentant
une section de fixation au véhicule (11) destinée à fixer le porte-charge (10) au véhicule (1) ;
une section de support de charge (13) allongée, en particulier un bras oscillant, comportant une face frontale qui peut pivoter par rapport à la section de fixation au véhicule (11), en particulier entre un état replié et un état déployé ; et
un mécanisme de blocage (15) permettant de bloquer la section de support de charge (13), en particulier l'extrémité distale du bras oscillant, dans lequel le porte-charge (10) présente un goujon (17) et une ouverture (9) réalisée de manière à être complémentaire du goujon (17), lesquels sont réglables en translation l'un par rapport à l'autre au moyen du mécanisme de blocage (15) et, dans un état de blocage du mécanisme de blocage (15), viennent en prise l'un dans l'autre afin de bloquer la section de support de charge (13) à partir de sa face frontale.

2. Porte-charge (10) selon la revendication 1, dans lequel les deux éléments de blocage (9, 17) réalisés de manière à être complémentaires l'un de l'autre viennent en prise l'un dans l'autre par complémentarité de forme lorsque le mécanisme de blocage (15) est dans l'état de blocage.

3. Porte-charge (10) selon la revendication 2, dans lequel les éléments de blocage comprennent un goujon (17) cylindrique, qui est en particulier réglable au moyen du mécanisme de blocage (15), et une ouverture (9) réalisée de manière à être complémentaire du goujon et réalisée dans la face frontale de la section de support de charge (13).

4. Porte-charge (10) selon l'une des revendications 2 à 3, comportant en outre un dispositif de centrage (19) permettant d'aligner l'un sur l'autre les éléments de blocage (9, 17) réalisés de manière à être complémentaires l'un de l'autre lorsque ceux-ci sont rapprochés l'un de l'autre par le mécanisme de blocage (15), dans lequel le dispositif de centrage est de préférence réalisé sous la forme d'un chanfrein (19) à une extrémité du goujon (17).

5. Porte-charge (10) selon l'une des revendications 2 à 4, comportant en outre une douille de soutien (16) dans laquelle l'un des éléments de blocage (17) est monté de manière à pouvoir coulisser, dans lequel l'élément de blocage (17) est réglable, en particulier en translation, par rapport à la douille de soutien (16) par l'intermédiaire d'un mécanisme à levier (20) et/ou dans lequel la douille de soutien (16) est disposée en particulier de manière coaxiale par rapport à la section de support de charge (13) lorsque celle-ci se trouve dans l'état replié.

6. Porte-charge (10) selon la revendication 5, dans lequel le mécanisme à levier (19) présente un levier (22) pouvant pivoter autour d'un axe de pivotement (21) ainsi qu'un élément coulissant (24) en liaison active mécanique avec le levier (22) et conçu pour effectuer, lors d'un mouvement de pivotement du levier (22) autour de l'axe de pivotement (21), un mouvement de coulissement, en particulier en translation, dans lequel l'élément coulissant (24) est en particulier disposé dans un trou oblong (23) prévu dans la douille de soutien (16) et est en liaison active mécanique avec l'élément de blocage (17) pouvant coulisser, de sorte qu'un mouvement de pivotement du levier (22) autour de l'axe de pivotement (21) entraîne un mouvement de coulissement en translation de l'élément de blocage (17) pouvant coulisser.

7. Porte-charge (10) selon l'une des revendications précédentes, dans lequel le mécanisme de blocage (15) est réalisé de manière à être autobloquant, de sorte que les contraintes survenant pendant le fonctionnement du porte-charge (10) ne favorisent pas l'ouverture du mécanisme de blocage (15).

8. Porte-charge (10) selon les revendications 6 et 7, dans lequel le mécanisme à levier (20) présente un organe de liaison (25) qui est monté sur le levier (20) de manière à pouvoir tourner autour d'un premier axe de rotation (26) et est monté sur l'élément coulissant (24) de manière à pouvoir tourner autour d'un second axe de rotation (27), dans lequel les deux axes de rotation (26, 27) et l'axe de pivotement (21) sont disposés, dans l'état bloqué du mécanisme de blocage (15), sur une droite qui s'étend parallèlement à l'axe de la douille de soutien (16) et/ou de la section de support de charge (13) lorsque celle-ci se trouve dans l'état replié.

9. Porte-charge (10) selon l'une des revendications 6 à 8, comportant en outre un mécanisme de verrouillage (30) permettant de verrouiller le levier (22) dans sa position de blocage, dans lequel le mécanisme de verrouillage (30) est de préférence réalisé comme un mécanisme d'encliquetage libérable et/ou présente de préférence deux éléments de verrouillage (31, 32) pouvant venir en prise l'un dans l'autre en particulier par complémentarité de forme, dans lequel l'un des éléments de verrouillage (32) est de préférence disposé sur le levier (22) et l'autre élément de verrouillage (31) est de préférence disposé sur la section de support de charge (13), dans lequel le mécanisme de verrouillage (30) peut être débloqué par l'intermédiaire d'un élément d'actionnement (33), en particulier d'un bouton d'actionnement.

10. Porte-charge (10) selon l'une des revendications précédentes, dans lequel le mécanisme de blocage (15) présente une surface de butée (18) qui est de préférence réalisée de manière à être complémentaire du contour extérieur de la section de support de charge (13), dans lequel les éléments de blocage (9, 17) sont de préférence alignés l'un sur l'autre lorsque la section de support de charge (13) est en appui contre la surface de butée (18).

11. Porte-charge (10) selon l'une des revendications précédentes, dans lequel la section de support de charge (13) présente un attelage pour remorque (8), en particulier un attelage à tête sphérique, le porte-charge (10) est réalisé de telle sorte que la section de fixation au véhicule (11) peut être fixée dans la direction transversale du véhicule (1) à une extrémité et le mécanisme de blocage (15) peut être fixé à l'autre extrémité du véhicule (1), de sorte que la section de support de charge (13), dans l'état replié, s'étend sensiblement sur toute la largeur du véhicule, et/ou le porte-charge (10) présente de préférence un porte-vélos fixé à la section de support de charge (13).

12. Véhicule (1) comportant un porte-charge (10) selon l'une des revendications précédentes, dans lequel le porte-charge (10) est monté à l'arrière du véhicule (2), en particulier sur le châssis du véhicule, dans lequel le véhicule (1) présente de préférence au moins une porte arrière (4) qui peut rester ouverte par pivotement de la section de support de charge (13) dans l'état déployé, même lorsqu'une charge, en particulier un vélo, est fixé sur la section de support de charge (13) à l'aide d'un porte-vélos.
